# EUROPEAN PATENT APPLICATION

(11) **EP 1 615 439 A2**
(43) Date of publication of application: **11.01.2006**
(21) Application number: 05104176.2
(22) Date of filing: 18.05.2005
(51) Int. Cl.: H04N 7/24

(54) **Network receiving apparatus and network transmitting apparatus**

(30) Priority: 27.05.2004 JP 2004157649
(71) Applicant: KABUSHIKI KAISHA TOSHIBA, Tokyo 105-8001 (JP)
(72) Inventor: Maeda, Shigeru Toshiba Corporation, Mianto-ku Tokyo, 105-8001 (JP)
(74) Representative: Henkel, Feiler & Hänzel

(57) **Abstract**

A network picture receiving apparatus is a network picture receiving apparatus that is connected to a network 100 and includes: a network I/F 107 as a receiving unit configured to receive an MPEG picture stream from the network 100; a buffer 109 having a predetermined capacity and configured to perform buffering of the MPEG picture stream; a buffer transfer unit 108 configured to transfer the MPEG picture stream received by the network I/F 107 to the buffer 109 by a unit of predetermined reproduction time obtained from the MPEG picture stream; and an MPEG decoder 110 configured to decode the MPEGpicture streambuffered in the buffer 109 into an original picture signal.

## Description

### CROSS-REFERENCE TO THE INVENTION

This application is based upon and claims the benefit of priority from the prior Japanese Patent Application No. 2004-157649, filed on May 27, 2004; the entire contents of which are incorporated herein by reference.

### BACKGROUND OF THE INVENTION

### 1. FIELD OF THE INVENTION

The present invention relates to a network transmitting apparatus which transmits, for example, an MPEG picture stream, and a network receiving apparatus which receives such an MPEG picture stream.

### 2. DESCRIPTION OF THE RELATED ART

Conventionally, in an apparatus which transmits and receives a picture via a network, a receiving device transfers received data to a decoder by a unit of constant amount. However, when a picture from a broadcast or an AV input is encoded by VBR (variable bit rate) for transmission/reception, reception of a constant amount of data takes long time at the time when data with a lower bit rate is being transferred, and an interval of transferring data to the decoder becomes long, so that an underflow of data occurs in the decoder and causes a problem such as interruption in displaying the picture.

As a prior art of this type, there has been disclosed a technology such that, in implementation of ATM transmission for example, a time stamp of an MPEG transport packet is readon the encoding (transmitting) side so as to transmit a packet in certain timing, thereby mitigating fluctuation of delay in transmission inATMs on a network (for example, refer to Japanese Patent Laid-open Application No. 2001-16267).

However, in the case of the above-described prior art, the problem of network transmission inherent in ATMs is solved on the transmitting side, which is basically not effective for streaming data transmitted at a variable bit rate and thus causes a problem that a phenomenon of temporary interruption in picture reproduction occurs on the receiver side when there is a significant change in the bit rate.

### SUMMARY OF THE INVENTION

The present invention is made for solving such a problem, and an object thereof is to provide a network picture transmitting apparatus and a network picture receiving apparatus capable of preventing temporarily interruption in picture reproduction while reproducing streaming data transmitted at a variable bit rate.

In order to solve the above-described problems, a network receiving apparatus according to one aspect of the present invention is a network picture receiving apparatus connected to a network, which includes: a receiving unit configured to receive an MPEG picture stream from the network; a buffer having a predetermined capacity and configured to perform buffering of the MPEG picture stream; a buffer transfer unit configured to transfer the MPEG picture stream received by the receiving unit to the buffer by a unit of predetermined reproduction time generated based on the MPEG picture stream; and an MPEG decoder configured to decode the MPEG picture stream buffered in the buffer into an original picture signal and reproduce the MPEG picture stream.

A network transmitting apparatus according to another aspect of the present invention includes: an encoder configured to encode a picture signal as an object to be transmitted and generate an MPEG picture stream; and a transmitting unit configured to transmit the MPEG picture stream encoded by the encoder to the network by a unit of predetermined reproduction time.

### BRIEF DESCRIPTION OF THE DRAWINGS

FIG. 1 is a view showing the configuration of a network picture transmitting and receiving system of a first embodiment according to the present invention.
FIG. 2 is a view showing a relationship between a bit rate and time in the case of encoding transmitting data by VBR.
FIG. 3 is a flowchart showing a first operation example using a time stamp of an MPEG picture stream.
FIG. 4 is a view for explaining the first operation example
FIG. 5 is a flowchart showing a second operation example using GOP of an MPEG picture stream.
FIG. 6 is a view for explaining the second operation example of FIG. 5.
FIG. 7 is a flowchart showing a third operation example using the number of frames of an MPEG picture stream.
FIG. 8 is a view showing the configuration of a network picture transmitting and receiving system of a second embodiment according to the present invention.

### DESCRIPTION OF THE EMBODIMENTS

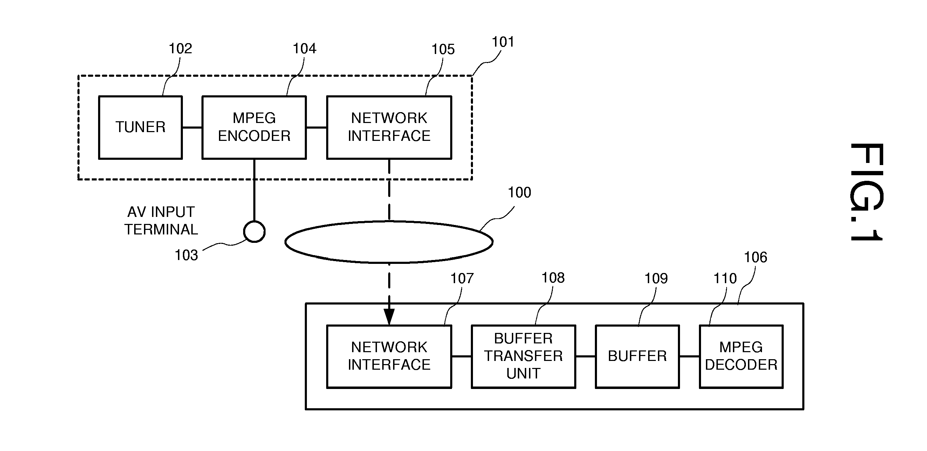

Hereinafter, embodiments of the present invention will be described in detail with reference to the drawings. FIG. 1 is a view showing the configuration of a network picture transmitting and receiving system of a first embodiment according to the present invention. As shown in FIG. 1, this network picture transmitting and receiving system (or network transmitting and receiving system) of the first embodiment comprises a network picture transmitting apparatus 101 (or network transmitting apparatus) which transmits an MPEG picture stream to a wireless or wired network 100, and a network picture receiving apparatus 106 (or network receiving apparatus) which receives and reproduces the MPEG picture stream transmitted to the network 100 by the network picture transmitting apparatus 101.

The network picture transmitting apparatus 101 has a tuner 102, an MPEG encoder 104 having an AV (audiovisual) input terminal 103, a network interface 105 (referred to as network I/F 105 below), and so on, and transmits an MPEG picture stream via a wireless network, for example, such as a wireless LAN.

The tuner 102 is, for example, a terrestrial digital television tuner, a BS digital tuner, a CS digital tuner, or the like which receives picture contents of a program broadcasted wirelessly via an antenna or the like.

The AV input terminal 103 is a terminal towhichpicture contents are inputted from another picture contents source such as DVD video player, video camera, VHS video recording/reproducing apparatus and the like.

The MPEG encoder 104 performs encoding of a picture signal such as analog picture signal, digital picture signal or the like inputted from the tuner 102 into a format of picture contents data for transmission such as MPEG-2 picture stream. Encoding is encryption of data based on a predetermined rule, and software and hardware performing the encoding is referred to as an encoder. The encoder performs compression, encryption and the like of data for example. In encoding of an MPEG-2 picture stream or the like of this example, when an object to be transmitted is an analog signal such as video signal for example, compression and encryption of data are performed along with digitalization of the signal.

The network I/F 105 is, for example, a wireless LAN interface, a wired LAN interface or the like, which transmits MPEG picture stream data inputted from the MPEG encoder 104 to a wireless or wired network 100.

The network picture transmitting apparatus 101 performs encoding of a picture signal such as analog picture signal, digital picture signal or the like inputted from the tuner 102 into a format of picture contents data for transmission such as MPEG-2 picture stream. Encoding is encryption of data based on a predetermined rule, and software and hardware performing the encoding is referred to as an encoder. The encoder performs compression, encryption and the like of data for example. In encoding of an MPEG-2 picture stream or the like of this example, when an object to be transmitted is an analog signal such as video signal, compression and encryption of data are performed along with digitalization of the signal.

The network I/F 105 is a wireless LAN interface, a wired LAN interface or the like, which transmits MPEG picture stream data inputted from the MPEG encoder 104 to a wireless or wired network 100.

The network picture transmitting apparatus 101 performs MPEG encoding of picture contents of a program received by the tuner 102 or of picture contents inputted from the AV input terminal 103 by the MPEG encoder 104 and transmits it to the network 100 by the network I/F 105.

The network picture receiving apparatus 106 receives an MPEG picture stream transmitted via the network 100. In the network picture receiving apparatus 106, the MPEG picture stream transmitted to the network 100 by the network I/F 105 of the network picture transmitting apparatus 101 is received by a network I/F 107 from the network 100 and transferred to a buffer transfer unit 108. The network I/F 107 is a network interface corresponding to the network I/F 105, and an interface similar to the network I/F 105 may be adopted.

The buffer transfer unit 108 transfers the MPEG picture stream received from the network I/F 107 by a unit of predetermined time interval to a buffer 109. The buffer transfer unit 108 has a CPU, a memory, and so on and performs arithmetic operation for determining the timing to transfer data.

The buffer 109 performs sequential buffering (storing) of data transferred from the buffer transfer unit 108 as much as its capacity permits. An MPEG decoder 110 performs MPEG decoding of the MPEG picture stream buffered in the buffer 109 into a picture signal for reproduction such as an analog picture signal for example and outputs to picture and sound input terminals of a monitor or the like for example. Decoding means changing of encoded data back to its original state. Incidentally, the picture signal may be outputted as a digital signal to a picture reproducing apparatus having a digital input terminal.

In other words, the network picture receiving apparatus 106 of this network picture transmitting and receiving system has the network I/F 107 as a receiving unit configured to receive an MPEG picture stream from the network 100, the buffer 109 having a predetermined capacity and configured to perform buffering of the MPEGpicturestream, the buffertransfer unit 108 configured to transfer the MPEG picture stream received by the network I/F 107 to the buffer 109 by a unit of predetermined reproduction time obtained from the MPEG picture stream, and the MPEG decoder 110 configured to decode the MPEG picture stream buffered in the buffer 109 into an original picture signal.

Here, it is considered the case that, in the network picture transmitting apparatus 101, the MPEG encoder 104 encodes a picture signal as an object to be transmitted by VBR (variable bit rate). Encoding by VBR can suppress the bit rate of a picture in a scene that includes less motion for example. This enables suppression of a bandwidth used in the network 100, so that transmission of a picture becomes possible even when the network bandwidth is narrow.

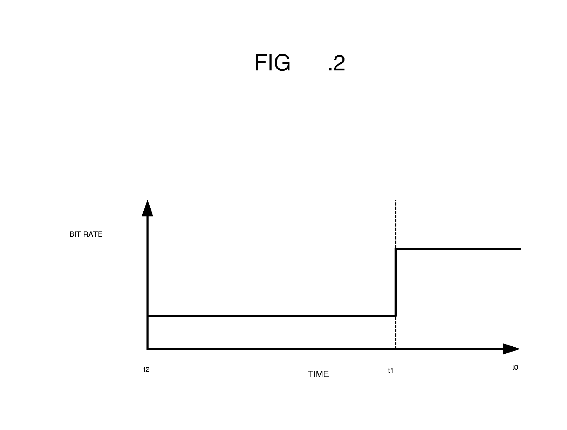

A relationship between a bit rate and time in the case of encoding transmitting data by VBR will be described with reference to FIG. 2. As shown in FIG. 2, it is assumed that encoding of a picture signal as an object to be transmitted is started at the time t0 and continued for a while by a high bit rate, but is performed by a low bit rate just before the time t1 and then continued until the time t2. The network picture transmitting apparatus 101 repeats transmission of an MPEG picture stream by a constant unit by the network I/F 105.

The network picture receiving apparatus 106 repeats receiving the MPEG picture stream transmitted by the network I/F107 by a constant unit, so that a reception bit rate becomes similar to FIG. 2 on the average.

Conventionally, in a receiving apparatus, a buffer transfer unit transfers a received picture stream to a buffer by a unit of constant amount. Assuming that data in buffer reaches the constant amount at the respective times t1 and t2, there is a time interval between the time t1 and the time t2, which causes a problem such that an underflow occurs in the internal buffer of an MPEG decoder and causes temporary interruption in picture reproduction.

Accordingly, in this network picture transmitting and receiving system, the buffer transfer unit 108 transfers data to the buffer 109 by a unit of constant reproduction time, so that the data is transferred from the buffer 109 to the MPEG decoder 110 at a constant time interval. Thus, the problem of underflow can be solved. The constant reproduction time interval is generated by obtaining one of the following information from data of a received picture stream:
(1) obtaining DTS (Decoding Time Stamp) in an MPEG stream;
(2) obtaining PTS (Presentation Time Stamp);
(3) obtaining SCR (System Clock Reference);
(4) obtaining PCR (Program Clock Reference).

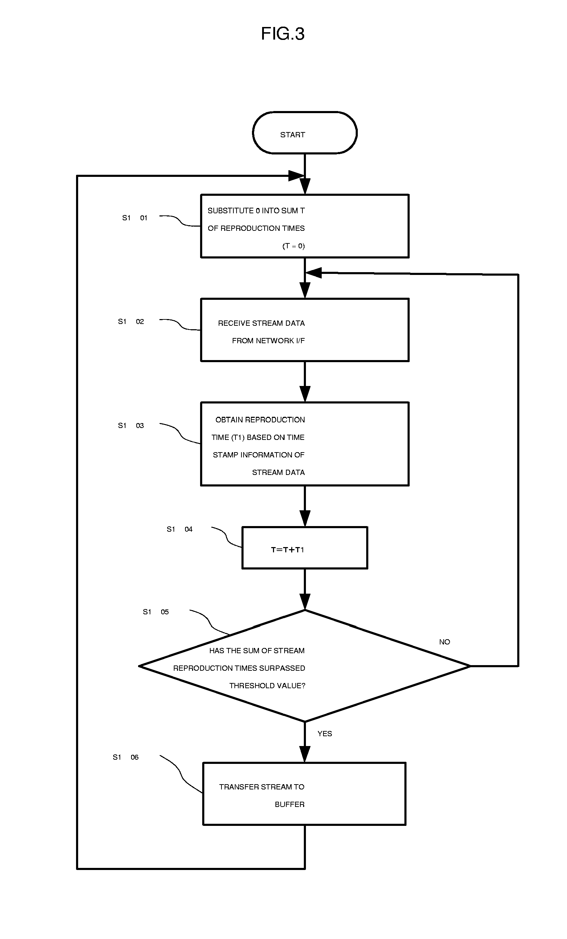

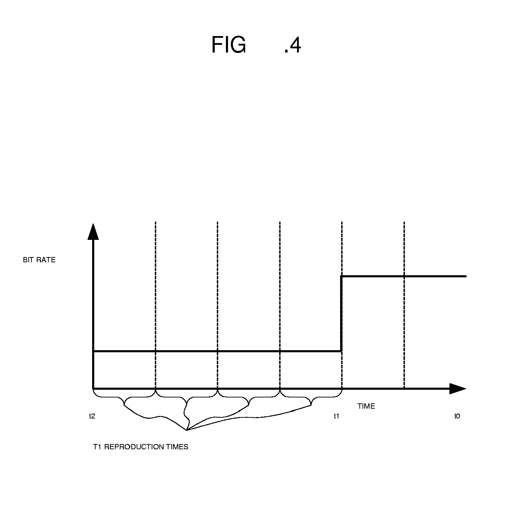

Hereinafter, a first to a third operation examples will be described in which the buffer transfer unit 108 transfers data to the buffer 109 by a unit of constant time interval. First, with reference to FIG. 3 and FIG. 4, the first operation example will be described using (1) DTS or (2) PTS as the time stamp of an MPEG picture stream.

In the case of this first operation example, in the buffer transfer unit 108, as shown in FIG. 3, first a CPU substitutes 0 (zero) into the sum T of reproduction times, in other words, sets T = 0 in a memory (Step S101, or S101).

When an MPEG picture stream received by the network I/F 107 is sent to the buffer transfer unit 108, the CPU receives the MPEG picture stream (S102), memorizes the received MPEG picture stream to extend it into the memory, and obtains a time stamp from the memorized MPEG picture stream. Next, the CPU obtains a reproduction time (T1) based on the obtained time stamp (S103).

The CPU sets the obtained reproduction time (T1) in the memory (S104). Specifically, the CPU adds the obtained reproduction time (T1) to the sum T of reproduction times (T = T + T1) in the memory. After the reproduction time (T1) is added in the memory, the CPU decides whether or not the sum T of stream reproduction times has surpassed a preset threshold value (S105).

If the sum T of stream reproduction times has not surpassed the threshold value (NO at S105), the CPU returns the process to the step S102, receives the next stream data, and repeats the above processes.

If the sum T of stream reproduction times has surpassed the threshold value (YES at S105), the CPU transfers the received MPEG picture stream by this unit to the buffer 109 (S106).

Specifically, in this first operation example, the buffer transfer unit 108 transfers data to the buffer 109 by a unit of constant reproduction time, so that the data is transferred from the buffer 109 to the MPEG decoder 110 at a constant time interval. Therefore, occurrence of an underflow in the buffer 109, which causes temporary interruption in picture reproduction or the like, can be prevented.

In FIG. 4, also between the time t1 and time t2, a data per one transfer is transferred from the buffer transfer unit 108 to the buffer 109 by a unit of reproduction time defined by the preset threshold value, so that the problem of picture interruption or the like does not occur.

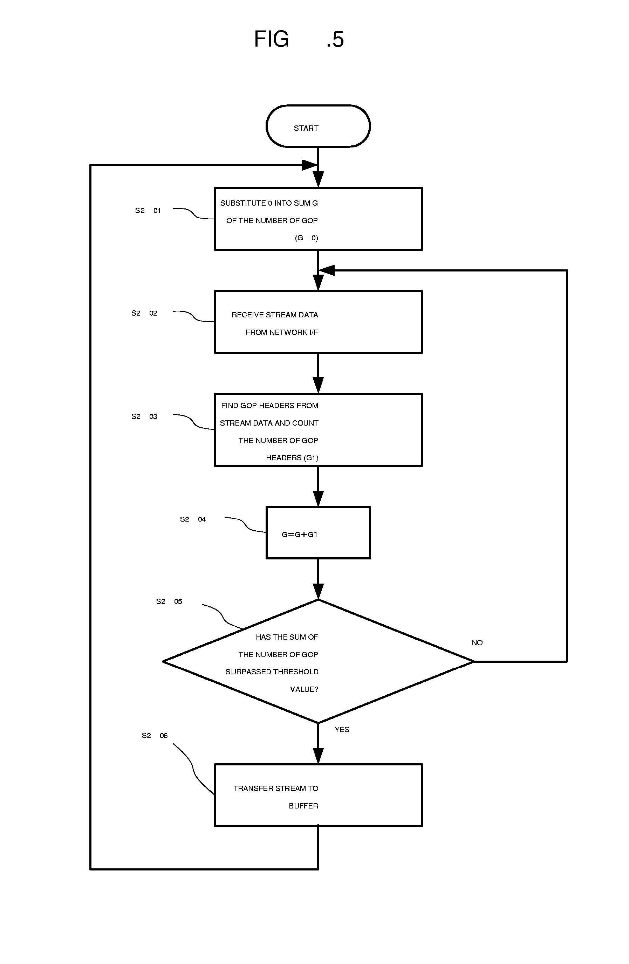

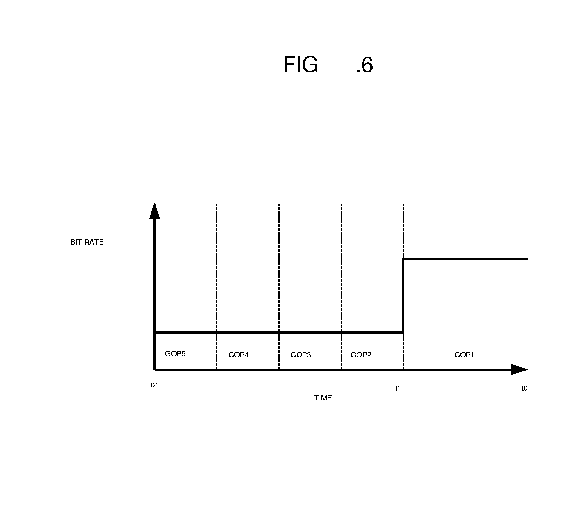

The second operation example using a GOP (group of pictures) of an MPEG picture stream will be described with reference to FIG. 5 and FIG. 6.

In the case of this second operation example, in the buffer transfer unit 108, as shown in FIG. 5, first the CPU substitutes 0(zero) into the sum G of the number of GOP, in other word, sets G = 0 in the memory (S201).

When an MPEG picture stream received by the network I/F 107 is sent to the buffer transfer unit 108, the CPU receives the MPEG picture stream (S202), memorizes the received MPEG picture stream to extend it into the memory, detects GOP headers in the memorized MPEG picture stream, and counts the number of detected GOP headers (G1) (S203).

The CPU set the number of counted GOP headers (G1) in the memory (S204). Specifically, the CPU adds the number of counted GOP (G1) to the sum G of the number of GOP in the memory (G = G + G1).

After the number of GOP (G1) is added in memory, the CPU decides whether or not the sum G of the number of GOP has surpassed a preset threshold value (S205).

If the sum G of the number of GOP has not surpassed the threshold value (NO at S205), the CPU returns the process to the step S202, receives the next stream data, and repeats the above processes.

If the sum G of the number of GOP has surpassed the threshold value (YES at S205), the CPU transfers the received MPEG picture stream by this unit to the buffer 109 (S206).

Specifically, in this second operation example, the buffer transfer unit 108 transfers data to the buffer 109 by a unit of constant number of GOP, so that the data is transferred from the buffer 109 to the MPEG decoder 110 at a constant time interval. Therefore, occurrence of an underflow can be prevented. Generally a GOP includes picture data for a 0. 5 second in NTSC, so that the data is transferred every 0.5 second approximately when the buffer transfer unit 108 transfers data to the buffer 109 by one GOP unit.

In FIG. 6, since four GOPs, i.e. GOP2 to GOP5, exist between the time t1 and the time t2, the buffer transfer unit 108 transfers a data to the buffer 109 by a unit of (t2 - t1)/4 as one transfer, so that the problem of picture interruption or the like does not occur.

When picture data is DVD video or the like for example, a sequence header always exists at the head of a GOP, and thus obtaining a GOP border is generally easier than obtaining time stamp information of an MPEG stream.

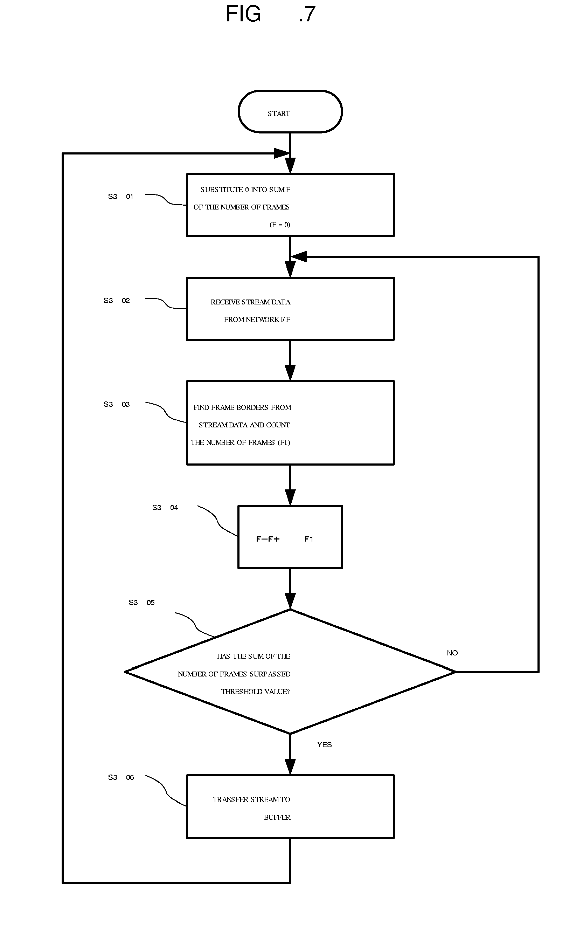

The third operation example using a display frame of an MPEG picture stream will be described with reference to FIG. 7.

In the case of this third operation, in the buffer transfer unit 108, as shown in FIG. 7, first the CPU substitutes 0 (zero) into the sum F of the number of display frames, in other word, sets F = 0 in the memory (S301).

When an MPEG picture stream received by the network I/F 107 is sent to the buffer transfer unit 108, the CPU receives the MPEG picture stream (S302), memorizes the received MPEG picture stream to extend it into the memory, detects frame borders in the memorized MPEG picture stream, and counts the number of detected frames (F1) (S303).

The CPU set the number of counted display frames (F1) into the memory (S304). Specifically, the CPU adds the number of counted frames (F1) to the sum F of the number of display frames in the memory (F = F + F1). After the number of display frames (F1) is added in the memory, the CPU decides whether or not the sum F of the number of display frames has surpassed a preset threshold value (S305).

If the sum F of display frames has not surpassed the threshold value (NO at S305), the CPU returns the process to the step S302, receives the next stream data, and repeats the above processes.

If the sum F of the number of display frames has surpassed the threshold value (YES at S305), the CPU transfers the received MPEG picture stream by this unit to the buffer 109 (S306).

Specifically, in this third operation example, the buffer transfer unit 108 transfers data to the buffer 109 by a unit of constant number of display frames, so that the data is transferred from the buffer 109 to the MPEG decoder 110 by a constant time interval. Therefore, occurrence of an underflow can be prevented.

In the case of NTSC, the picture having approximately 30 frames is displayed in one second, and therefore data is transferred to the buffer 109 by a unit of, for example, approximately 0.5 second if the buffer transfer unit 108 transfers the data to the buffer 109 by a 15-frame unit. Obtaining the number of frames is generally a complicated process than obtaining the GOP border, but it makes possible to respond to a case that a picture stream does not have the GOP configuration.

Thus, according to the network picture transmitting and receiving system of this first embodiment, the buffer transfer unit 108 performs transfer of data to the buffer 109 by a unit of constant reproduction time, a unit of constant number of GOP, or a unit of constant number of frames, so that the data is transferred at a constant time interval from the buffer 109 to the MPEG decoder 110.

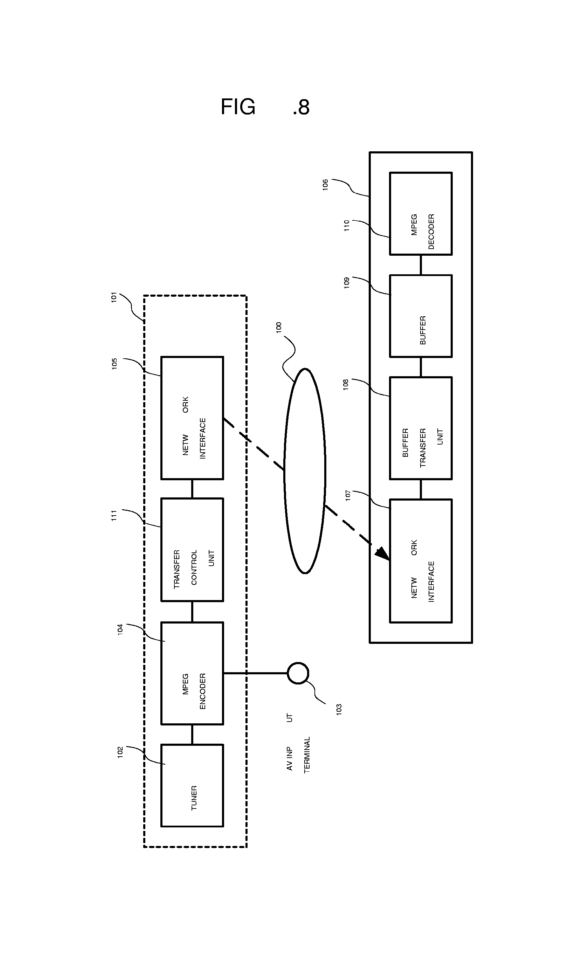

A network picture transmitting and receiving systemof a second embodiment according to the present invention will be described with reference to FIG. 8. Note that the same components as those in the above-described first embodimen twill be designated the same reference numerals, and the description thereof will be omitted.

As shown in FIG. 8, a network picture transmitting apparatus 101 of the network picture transmitting and receiving system of this second embodiment has a tuner 102, an MPEG encoder 104 having an AV (audiovisual) input terminal 103, a transfer control unit 111, a network interface 105 (referred to as network I/F 105 below), and so on, and transmits an MPEG picture stream via a network 100 such as a wireless LAN, wired LAN, or the like for example to a network picture receiving apparatus 106.

The MPEG encoder 104 performs MPEG encoding of a broadcast signal received by the tuner 102 or a picture signal inputted from the AV input terminal 103 and transfers this to the transfer control unit 111.

The transfer control unit 111 transfers the data transferred from the MPEG encoder 104 to the network I/F 105 by a unit of constant display time, a unit of constant number of GOP, or a unit of constant number of frames. The network I/F 105 transmits an MPEG picture stream to the network 100 by the unit of data transferred from the transfer control unit 111.

The network picture receiving apparatus 106 receives the MPEG picture stream transmitted from the network I/F 105 by the network I/F 107, and transfers this to the buffer transfer unit 108 by the unit of received data. The buffer transfer unit 108 transfers this to the buffer 109 by the unit of transferred data as it is. The MPEG decoder 110 performs MPEG decoding of the MPEG picture stream in the buffer 109 and output this as analog picture. Incidentally, the transmitting side (the network picture transmitting apparatus 101) transmits the MPEG picture stream by a unit of time, so that, an already existing buffer transfer unit may be used as the buffer transfer unit 108 on the receiving side (the network picture receiving apparatus 106), or the buffer transfer unit 108 described in the first embodiment may be used as well.

Thus, according to the network picture transmitting and receiving system of this second embodiment, the network picture transmitting apparatus 101 transmits MPEG picture stream data by any one of the unit of constant display time, unit of constant number of GOP, or unit of constant number of frames. The network picture receiving apparatus 106 transfers the data to the buffer 109 while keeping the unit of the received data.

Thus, by arranging the transfer control unit 111 which times data transfer on the transmitting side, although it is possible that a delay occurs on the network 100 due to transfer control, the stream is generated on the transmitting side, so that the network picture transmitting apparatus 101 can take the control to divide the MPEG picture stream into a desired reproduction interval for transmission.

In the network picture transmitting and receiving system according to the embodiments of the present invention, the buffer transfer unit in the network picture receiving apparatus and/or the transfer control unit in the network picture transmitting apparatus may include a unit configured to generate a reproduction time from time stamp information in anMPEGpicture stream. Further, similarly, the buffer transfer unit in the network picture receiving apparatus and/or the transfer control unit in the network picture transmitting apparatus may include a unit configured to generate a reproduction time from the number of GOP (Group of Pictures) in an MPEG picture stream. Furthermore, similarly, the buffer transfer unit in the network picture receiving apparatus and/or the transfer control unit in the network picture transmitting apparatus may include a unit configured to generate a reproduction time from the number of display frames in an MPEG picture stream.

In the above-described description, the present invention has been described with reference to specific typical embodiments. However, it is apparent that many modifications and variations may be made without departing from the wide gist and scope of the present invention, which are described in appended claims. Therefore, the specification and the drawings are to be considered as illustrative and not as restrictive.

## Claims

1. A network picture receiving apparatus connected to a network, comprising:
a receiving unit configured to receive an MPEG picture stream from the network;
a buffer configured to perform buffering of the MPEG picture stream;
a buffer transfer unit configured to transfer the MPEG picture stream received by said receiving unit to said buffer by a unit of predetermined reproduction time generated based on the MPEG picture stream; and
an MPEG decoder configured to decode the MPEG picture stream buffered in said buffer and reproduce a picture signal.

2. A network picture receiving apparatus according to claim 1, wherein said buffer transfer unit comprises a reproduction time generator configured to generate a reproduction time based on a time stamp information in the MPEG picture stream.

3. A network picture receiving apparatus according to claim 1, wherein said buffer transfer unit comprises a reproduction time generator configured to generate a reproduction time based on the number of GOP (Group of Pictures) in the MPEG picture stream.

4. A network picture receiving apparatus according to claim 1, wherein said buffer transfer unit comprises a reproduction time generator configured to generate a reproduction time based on the number of display frames in the MPEG picture stream.

5. A network picture receiving apparatus according to claim 1, wherein the MPEG picture stream is a data stream encoded by a variable bit rate (VBR).

6. A network picture receiving apparatus according to claim 2, wherein the MPEG picture stream is a data stream encoded by a variable bit rate (VBR).

7. A network picture receiving apparatus according to claim 3, wherein the MPEG picture stream is a data stream encoded by a variable bit rate (VBR).

8. A network picture receiving apparatus according to claim 4, wherein the MPEG picture stream is a data stream encoded by a variable bit rate (VBR).

9. A network picture transmitting apparatus connected to a network, said apparatus comprising:
an encoder configured to encode a picture signal as an object to be transmitted and generate an MPEG picture stream; and
a transmitting unit configured to transmit the MPEG picture stream encoded by said encoder to the network by a unit of predetermined reproduction time.

10. A network picture transmitting apparatus according to claim 9, wherein said transmitting unit comprises a reproduction time generator configured to generate a reproduction time based on a time stamp information in the MPEG picture stream.

11. A network picture transmitting apparatus according to claim 9, wherein said transmitting unit comprises a reproduction time generator configured to generate a reproduction time based on the number of GOP (Group of Pictures) in the MPEG picture stream.

12. A network picture transmitting apparatus according to claim 9, wherein said transmitting unit comprises a reproduction time generator configured to generate a reproduction time based on the number of display frames in the MPEG picture stream.

13. A network picture transmitting apparatus according to claim 9, wherein the MPEG picture stream is a data stream encoded by a variable bit rate (VBR).

14. A network picture transmitting apparatus according to claim 10, wherein the MPEG picture stream is a data stream encoded by a variable bit rate (VBR).

15. A network picture transmitting apparatus according to claim 11, wherein the MPEG picture stream is a data stream encoded by a variable bit rate (VBR).

16. A network picture transmitting apparatus according to claim 12, wherein the MPEG picture stream is a data stream encoded by a variable bit rate (VBR).
